# NEUE EUROPÄISCHE PATENTSCHRIFT

(11) **EP 0 879 840 B2**
(45) Veröffentlichungstag und Bekanntmachung des Hinweises auf die Entscheidung über den Einspruch: **31.03.2004**
(45) Hinweis auf die Patenterteilung: 14.03.2001
(21) Anmeldenummer: 98108408.0
(22) Anmeldetag: 08.05.1998
(51) Int. Cl.: C08G 77/46, C08G 77/42, C08G 77/38

(54) **Polyhydroxyorganyl-, insbesondere Zucker- oder Zuckerderivatreste und Polyoxyalkylenreste aufweisende Organopolysiloxane**
Organopolysiloxanes containing polyhydroxyorganyl groups, especially sugar or sugar derivative groups, and polyoxyalkylene groups
Organopolysiloxanes contenant des groupes polyhydroxyorganyle, en particulier de sucre ou de dérivés de sucre et des groupes polyoxyalkylènes

(30) Priorität: 22.05.1997 DE 19721353
(43) Veröffentlichungstag der Anmeldung: 25.11.1998
(73) Patentinhaber: Goldschmidt AG, 45127 Essen (DE)
(72) Erfinder: Dietz, Thomas, Dr., 45259 Essen (DE); Grüning, Burghard, Dr., 45134 Essen (DE); Lersch, Peter, Dr., Midlothian, Virginia 23113 (US); Weitemeyer, Christian, Dr., 45134 Essen (DE)

(56) Entgegenhaltungen:
- EP-A- 0 573 864
- EP-A- 0 612 759
- EP-B- 4 700 613
- DE-A- 4 318 536
- FR-A- 2 646 672
- US-A- 5 411 729
- US-A- 5 428 142

## Beschreibung

Die vorliegende Erfindung betrifft Polyhydroxyorganyl-, insbesondere Zucker- oder Zuckerderivatreste und Polyoxyalkylenreste aufweisende Organopolysiloxane, Verfahren zu deren Herstellung sowiederen Verwendung.

Umsetzungsprodukte aus Siloxanen und Zuckern bzw. Zuckerderivaten und Verfahren zu deren Herstellung sowie deren Einsatz in tensidischen Anwendungen bei der Glasfaserherstellung oder zur Modifizierung von Kontaktlinsen sind bereits bekannt. Verschiedene Synthesewege für die Verknüpfung von (hydrophilen) Zuckerresten über hydrolysestabile Si-C-Bindungen mit geeigneten funktionellen Siloxanen werden in der Patent- und Fachliteratur beschrieben.

In der AT-A-393 509 wird beispielsweise die Synthese saccharidmodifizierter Siloxanverbindungen durch Hydrosilylierung von Organohydrogensiloxanen mit C-C-Mehrfachbindungen enthaltenden Sacchariden beschrieben. Diese Methode hat allerdings den Nachteil, daß die ablaufende Reaktion nur in Gegenwart von Schutzgruppen selektiv verläuft.

Eine Umsetzung von aminofunktionellen Polysiloxanen mit Zuckerlactonen ist Gegenstand der DE-A-43 18 539. Die resultierende Verknüpfung über eine Amidbindung ist allerdings bei der Verwendung dieser Materialien in wäßrigen Medien nur eingeschränkt hydrolysestabil.

Die FR-A-2 646 672 beschreibt die Umsetzung von epoxyfunktionellen Polysiloxanen mit Zuckerderivaten, wie Gluconsäure. Auch hier wird die Verwendung dieser Materialien in wäßrigen Medien durch die Hydrolyseempfindlichkeit der Esterbindung eingeschränkt.

Eine weitere Möglichkeit geht von Hydroxyalkylsiloxanen aus, die mit Sacchariden in einer säurekatalysierten Glycosidierungsreaktion umgesetzt werden, wie z. B. in der DE-A-43 06 041 beschrieben. Bei dieser beschriebenen Reaktionsweise muß jedoch mit einem Überschuß an Hydroxyalkylsiloxan gearbeitet werden, da nur so definierte Produkte mit niedrigen Glycosidierungsgraden erhalten werden. Das überschüssige Hydroxyalkylsiloxan kann nicht abgetrennt werden und verbleibt im Produkt, wo es unter Umständen die gewünschten Eigenschaften des Zuckersiloxans negativ beeinflussen kann. Zusätzlich werden durch die Verwendung des sauren Katalysators Abbaureaktionen an der Siloxankette induziert.

In der DE-A-43 18 537 werden verschiedene Wege zur Herstellung von siloxanylmodifizierten polyhydroxylierten Kohlenwasserstoffen beansprucht, wie die Hydrosilylierung von Propinylglucosid an SiH-Sil(ox)ane oder die Umsetzung von epoxyfunktionellen Di-und Trisiloxanen mit Zuckeraminen, wie etwa Glucamin. Auch die hier aufgezeigten Synthesewege sind von der Problematik geprägt, daß zunächst die ausgeprägte Polaritätsdifferenz zwischen (hydrophilem) Zuckerrest und (hydrophobem) Siloxanrest überwunden werden muß. Dazu werden mehrstufige Synthesewege, u. a. unter Rückgriff auf bekannte Schutzgruppenchemie, beschrieben. Schon zur Modifizierung von niedermolekularen, niedrigfunktionellen Siloxanverbindungen sind bereits lange Reaktionszeiten erforderlich, auch wenn hohe Temperaturen, Autoklavendrücke und erhebliche Lösungsmittelmengen verwendet werden. Mit ansteigendem Molekulargewicht der Siloxane nehmen die Unverträglichkeitsprobleme derart zu, daß die erreichbaren Reaktionsgeschwindigkeiten vernachlässigbar gering werden. So mögen die beschriebenen Methoden zwar präparative Bedeutung besitzen, ihre Überführung in produktionstechnische Maßstäbe erscheint aber aus den angeführten Gründen nicht praktikabel.

Das aus der DE-A-43 06 041 bekannte Prinzip wird gemäß US-A-5 428 142 zur Herstellung von Siliconbasierenden Glycosiden ausgenutzt, indem hier als Ausgangsmaterialien Polyethersiloxane mit Sacchariden oder Saccharidderivaten in Gegenwart eines sauren Katalysators umgesetzt werden. Hier resultiert aus der Reaktion der OH-Gruppe des Polyethers mit dem Saccharid eine Verknüpfung über eine Acetalgruppe, wobei der Polyetherrest aber nur als Abstandshalter (Spacer) zwischen Siloxangerüst und Zucker fungiert. Durch diese Modifizierung werden Materialien erhalten, die gute Emollienteigenschaften besitzen, substantiv gegenüber Haaren und der Haut sind und inverse Trübungspunkte aufweisen.

Neben den schon aus der DE-A-43 06 041 bekannten Nachteilen kommen weitere hinzu: So sind die in diesem Patent zur Herstellung von Siloxanglycosiden beschriebenen Methoden durch niedrige Reaktionsgeschwindigkeiten gekennzeichnet, wie sie üblicherweise bei Polyethersiloxanen beobachtet werden, die langkettige und/oder endständig sekundäre OH-funktionelle Polyetherreste enthalten. Dies führt zu unökonomisch langen Reaktionszeiten oder zu hohen Temperaturbelastungen, welche beide Farbe und Eigenschaften der erhaltenen Produkte beeinträchtigen. Ebenso können auch hier durch die Verwendung des sauren Katalysators Abbaureaktionen an der Siloxankette induziert werden. Weiterhin ist die aufgezeigte Methode nur auf OH-funktionelle Siliconpolyether als Ausgangsmaterialien beschränkt. Umsetzungen mit endständig verkappten Siliconpolyethern, welche endständig modifiziert sind und z. B. eine polare Ester- oder Ethergruppe aufweisen, sind prinzipiell nicht möglich. Diese beschriebenen und weitere aus dem Stand der Technik bekannte verschiedene Nachteile bei der Synthese von Siloxan-Zuckerderivaten galt es zu überwinden.

Überraschenderweise wurde nun gefunden, daß neuartige temäre Organopolysiloxan-Copolymere, bei denen Polyetherreste und Polyhydroxyorganylreste unabhängig nebeneinander ans Siloxangerüst gebunden vorliegen, ohne daß die Verknüpfung über die OH-Funktionalität des Polyethers erfolgt, in einfacher Weise auf verschiedenen Synthesewegen hergestellt werden können. Zusätzlich und unerwartet zeigen die erfindungsgemäßen Materialien auch besondere Eigenschaften, aufgrund derer sie als Silicontenside verwendbar sind. Man kann nämlich den für Polyethersiloxane typischen inversen Trübungspunkt, d. i. das Eintrüben ihrer wäßrigen Lösungen beim Erwärmen, gezielt durch das Verhältnis von Polyhydroxyorganyl- zu Polyetherresten in den erfindungsgemäßen Siloxan-Copolymeren anheben bzw. gänzlich beseitigen. Dies erreicht man dagegen nicht mit Mischungen aus Polyhydroxyorganylsiloxan und Polyethersiloxan.

Gegenstand der vorliegenden Erfindung sind daher Organopolysiloxan-Copolymere, enthaltend im Mittel mindestens eine über einen Spacer an das Siloxan gebundene Polyhydroxyorganyl- bzw. Zucker- oder Zuckerderivatgruppe und im Mittel mindestens eine Polyoxyalkylengruppe, der allgemeinen Formel: 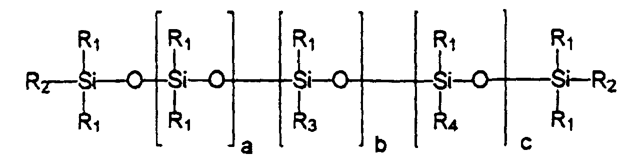 mit
R₁ = Alkylrest mit 1 bis 4 C-Atomen,
R₂ = R₁, R₃ und/oder R₄,
wobei die Indices a, b und c ganze Zahlen in den angegebenen Bereichen darstellen
a = 0 bis 200,
b = 0 bis 50,
c = 0 bis 50,
mit den Maßgaben, daß
mindestens jeweils ein Rest R₃ und R₄ enthalten ist,
insbesondere für b = 0 und c ≥ 1 mindestens einer der beiden Reste R₂ dann einem Rest R₃ entspricht,
für c = 0 und b ≥ 1 mindestens einer der beiden Reste R₂ dann einem Rest R₄ entspricht,
und für b = c = 0 die beiden Reste R₂ dann je einem Rest R₃ und einem Rest R₄ entsprechen,
die Bereiche für a, b und c bevorzugt
a = 1 bis 150,
b = 1 bis 30, insbesondere 10,
c = 1 bis 30, insbesondere 10,
besonders bevorzugt
a = 10 bis 100,
b = 1 bis 20, insbesondere 4,
c = 1 bis 20, insbesondere 4, sind
und der Quotient b/c vorzugsweise Werte von 0,1 bis 10, besonders bevorzugt von 0,25 bis 4 annehmen kann,
- R₃ =: statistisch oder blockweise aufgebauter Polyoxyalkylenrest der allgemeinen durchschnittlichen Formel

R₅-(C₂H₄O)_{d}-(C₃H₆O)ₑ-(C₄H₈O)_{f}-R₆

mit
d = 0 bis 100,
e = 0 bis 100,
f = 0 bis 100,
mit der Maßgabe, daß wenigstens einer der Indices d, e oder f ≥ 1 ist,
R₅ = Alkylenoxyrest mit 1 bis 20 C-Atomen, der gegebenenfalls verzweigt ist und/oder Doppelbindungen enthalten kann,
R₆ = Hydroxy-, Alkoxy- oder Acyloxyrest mit 1 bis 20 C-Atomen,
- R₄ =: Rest der allgemeinen Formel -R₇-PH, wobei
der Rest R₇ als Spacer zwischen Siloxangerüst und Polyhydroxyorganylrest bzw. Zuckerrest fungiert und von aus dem Stand der Technik für polyhydroxyorganyl- bzw. zuckermodifizierte Siloxane bekannter Art ist, ausgenommen ein Polyetherrest,
PH ein Polyhydroxyorganylrest ist, der eine definierte Anzahl n von (C-OH)-Gruppen enthält, wobei n 5 bis 15 ist.

Dabei handelt es sich im besonderen um ein Mono-, Di-, Oligo-oder Polysaccharid, deren Glycoside oder entsprechende Derivate. Beispiele hierfürsind Glucose, Maltose, Raffinose, Sorbit, Glucosamin, Glucopyranosylamin, Glucamin, N-Methylglucamin, Isomaltamin, Gluconsäure, Heptagluconsäure.

Übliche Spacergruppen R₇ leiten sich ab von Verbindungen, die zum einen eine zur hydrosilylierenden Anlagerung an Wasserstoffsiloxane befähigte C-C-Mehrfachbindung und zum anderen eine zur Reaktion mit der Polyhydroxyverbindung bzw. dem Zucker oder Zuckerderivat befähigte reaktive Gruppe besitzen. Beispiele hierfür sind Alkenyl- oder Alkinylalkohole wie Allylalkohol, Hexenol oder Propinylalkohol, Alkenylamine wie Allylamin, N-Ethyl-methallylamin oder N-Aminoethyl-allylamin sowie epoxyfunktionelle Alkene wie Allylglycidylether oder Vinylcyclohexenoxid.

Die Art der chemischen Verknüpfung zwischen Spacer R₇ und dem Polyhydroxyorganylrest PH ergibt sich aus den aus dem Stand der Technik bekannten Methoden zur Verknüpfung von Polyhydroxyorganylverbindungen bzw. Zuckern mit Siloxanen. Die Verknüpfung kann zum Beispiel über eine Acetal-, Ester-, Amid-, Ether-, Thioether- oder Aminbindung erfolgen. Bevorzugt sind jedoch wegen ihrer Hydrolysestabilität eine Ether-, Thioether- oder Aminbindung, wie sie zum Beispiel durch Umsetzung eines aminofunktionellen Zuckerderivats mit einem epoxyfunktionellen Siloxan erhalten wird.

Ferner ist Gegenstand der vorliegenden Erfindung die Verwendung der Polysiloxan-Copolymeren in tensidischen Anwendungen, insbesondere als Silicontenside.
Die Besonderheit dieser neuen Verbindungsklasse besteht darin, daß die verschiedenen Reste nebeneinander und unabhängig voneinander im Molekül vorliegen. Im Gegensatz zu den in US-A5 428 142 beanspruchten Siliconpolyetherglycosiden besteht die Möglichkeit, daß die Polyetherreste nicht endverschlossen sind. Femer ist es möglich, alle beliebigen Verhältnisse von Zuckerzu Polyetherresten zu erzeugen, insbesondere auch solche, die größer als 1 sind, was bei den Siliconpolyetherglycosiden des Standes der Technik nicht möglich ist, da der Zuckerrest direkt an den Polyetherrest geknüpft ist und somit maximal so viele Zuckerreste ins Molekül eingeführt werden können, wie Polyetherreste vorhanden sind.

Ein weiterer wesentlicher Vorteil der hier beanspruchten Polyhydroxyorganyl-Polyoxyalkylen-Siloxan-Copolymeren im Vergleich zu den Siliconpolyetherglycosiden des Standes der Technik besteht darin, daß die Verknüpfung des Zuckerrestes mit dem Siloxan thermisch stabil und hydrolysestabil ist, da es sich nicht um eine säure- und temperaturempfindliche Acetalbindung handelt.

Die neuartigen Siloxan-Copolymeren können in an sich bekannter Weise durch Hydrosilylierungsreaktionen hergestellt werden.

Dazu werden Organohydrogensiloxane in Gegenwart eines Hydrosilylierungskatalysators gleichzeitig oder nacheinander mit C-C-Mehrfachbindungen enthaltenden Polyethern und C-C-Mehrfachbindungen enthaltenden Polyhydroxyorganylverbindungen, die gegebenenfalls in geschützter Form vorliegen können, umgesetzt. Besonders vorteilhaft ist es aber, in einem ersten Schritt nicht direkt die Polyhydroxyorganylverbindung, sondern eine mit dem Organowasserstoffsiloxan besser verträgliche Verbindung mit abgeschwächter Polarität umzusetzen. In einem Folgeschritt wird daraufhin die Polyhydroxyorganylverbindung durch eine chemische Reaktion an das bereits polar vormodifizierte Siloxan gebunden. Der Vorteil des letztgenannten Verfahrens zur Herstellung dieser neguartigen ternären Siloxane besteht darin, daß deren Vorstufe, die bereits den Polyetherrest enthält, mit dem Zucker(derivat) besser verträglich ist und somit deren Reaktion schonender und schneller verläuft, als wenn man direkt von dem (hydrophoben) Siloxan und dem (stark hydrophilen) Zucker(derivat) ausgeht. Zwar wird dieses Prinzip auch schon in der US-A-5 428 142 mit der Glycosidierung von Polyethersiloxanen angewendet, jedoch müssen hierbei die bereits oben genannten Nachteile in Kauf genommen werden. Somit stellt diese Methode einen neuartigen Zugang, insbesondere für hochmolekulare und temperaturstabile Zuckersiloxane dar, deren Herstellung auf direktem Weg aus zuvor beschriebenen Gründen bislang nicht möglich war. Mit dem in den Beispielen durchgeführten Zwei-StufenVerfahren werden alle im Stand der Technik beschriebenen Nachteile bei den Verfahren zur Herstellung von Zuckersiloxanen - Verwendung von Schutzgruppen, Zuckerüberschuß, Abbaureaktionen am Siloxan, Bildung hydrolyse- und hitzeempfindlicher Bindungen, lange Reaktionsdauer - beseitigt.

Zusätzlich und unerwartet zeigen die erfindungsgemäßen Materialien auch Eigenschaften, aufgrund derer sie als Silicontenside mit besonderen Eigenschaften verwendbar sind. Diese besondere Eigenschaft resultiert gerade aus dem Nebeneinandervorliegen freier Polyether- und Polyhydroxyorganyl- bzw. Zucker(derivat)reste in diesen ternären Silicon-Copolymeren. Siliconpolyether gehören zur Klasse nichtionischer Tenside, die ein inverses Löslichkeitsverhalten in Wasser aufweisen, d. h. mit steigender Temperatur immer unlöslicher werden. Dieses Verhalten wird durch den sogenannten inversen Trübungspunkt definiert, zu dessen detaillierter Erklärung auf die Literatur verwiesen sei (Bd. 1 und 23, Nonionic Surfactants der Reihe Surf. Science Series, Hrsg.: Martin Schick). Siliconzucker sind ebenfalls nichtionische Tenside, aber sie zeigen ein "normales" Löslichkeitsverhalten, d. h. sie lösen sich mit steigender Temperatur immer besser in Wasser. Durch eine entsprechende Balance von Polyether- und Zuckergruppen auf molekularer Ebene, wie in den hier beanspruchten Verbindungen, können daher Silicontenside mit maßgeschneiderten Löslichkeitsparametern hergestellt werden, die z. B. als Emulgatoren für den Einsatz in Mikroemulsionen interessant sind. Dieser Effekt kann nicht mit Mischungen entsprechender Anteile eines reinen Zuckersiloxans und eines reinen Polyethersiloxans erzielt werden (siehe Tab. 3). Um Lösungen solcher Mischungen überhaupt herstellen zu können, muß man sogar getrennt Lösungen der beiden Siloxane ansetzen und anschließend vereinigen, da die reinen Komponenten aufgrund ihrer ausgeprägten Polaritätsdifferenz nur unzureichend miteinander mischbar sind.

Ferner zeigte sich, daß die neuartigen ternären Zucker-Polyether-Siloxane sich durch eine stark erhöhte Wasserlöslichkeit im Vergleich zu entsprechenden binären Zuckersiloxanen auszeichnen. Reine Zuckersiloxane sind nämlich trotz der Vielzahl von OH-Gruppen in Wasser schlecht löslich, vermutlich aufgrund der Ausbildung von Aggregaten in Folge starker Wasserstoffbrückenbindungen. Dagegen können die erfindungsgemäßen Verbindungen mit ihrer hohen Polarität als grenzflächenaktive Substanzen in bevorzugt polaren, insbesondere wäßrigen Medien eingesetzt werden, insbesondere dort, wo auch die günstigen Eigenschaften des Siloxanrestes, wie z. B. Substantivität gegenüber organischen oder anorganischen Materialien, erwünscht sind.

Gegenstand der Anmeldung ist ferner ein Verfahren zur Herstellung der erfindungsgemäßen Verbindungen, das sich aus zwei Stufen zusammensetzt. Das zugrundeliegende Prinzip besteht darin, daß das (unpolare) Siloxan in der ersten Stufe durch Anlagerung eines Polyethers bereits vorab "polar eingestellt" wird, so daß es in der zweiten Stufe mit einer deutlich polareren Polyhydroxyorganylverbindung rasch und schonend umgesetzt werden kann, da die Reaktionspartner besser miteinander verträglich sind, als wenn man ein (unpolares) Siloxan mit einer polaren Verbindung direkt umsetzt. Praktikabel ist beispielsweise die partielle Umsetzung eines Organohydrogensiloxans mit einem Polyether in einer Hydrosilylierungsreaktion und die anschließende Absättigung der restlichen SiH-Gruppen mit einer C-C-Mehrfachbindung enthaltenden Polyhydroxyorganylverbindung. Ein weiteres Beispiel für diese Vorgehensweise ist die Cohydrosilylierung eines Polyethers und einer anderen Verbindung mit C-C-Mehrfachbindung, die eine funktionelle Gruppe enthält, die zur Reaktion mit einer Polyhydroxyorganylverbindung befähigt ist und somit die Anknüpfung des Polyhydroxyorganylrestes an das Siloxan bewirkt. Dieses Verfahren wird in den unten beschriebenen Beispielen angewendet, wo man ein Organohydrogensiloxan mit einer Mischung aus einem Polyether und Allylglycidether, der eine reaktive Epoxid-Gruppe enthält, hydrosilyliert und anschließend das Polyether-Epoxy-Siloxan mit einem Aminozucker zum Polyether-Zucker-Siloxan unter Ausbildung einer thermo- und hydrolysestabilen Aminogruppe umsetzt.

Beispiele erfindungsgemäßer Verbindungen sind: 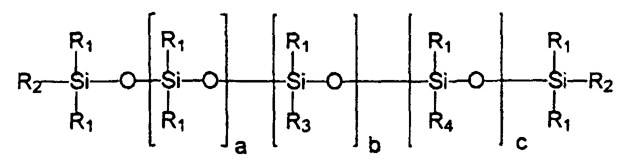
a) a = 1, b = 1, c = 1
   R₂ = R₁ 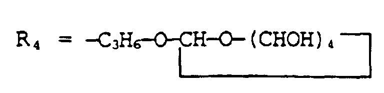
   R₃ = -C₃H₆-(C₂H₄O)₁₀-OH
b) a = 25, b = 5, c = 5
   R₂ = R₁
   R₄ = -C₃H₆-NH-CO-(CHOH)₄CH₂OH
   R₃ = -C₃H₆-(C₂H₄O)₅-(C₃H₆O)₅-OCH₃
c)a=1,b=1,c=1
   R₂ = R₃
   R₄ = -C₃H₆-O-CH₂(CHOH)CH₂-O-CO(CHOH)₄CH₂OH
   R₃ = -C₆H₁₂-(C₂H₄O)₁₀-(C₃H₆O)₃-OH

Als Ausgangsverbindungen werden Polysiloxane mit seiten- und/oder endständigen SiH-Gruppen eingesetzt, wie sie aus dem Stand der Technik bekannt sind. Die bevorzugten Organopolysiloxane sind lineare Polymere der allgemeinen Formel: 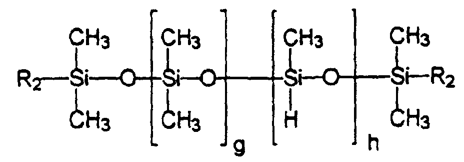 wobei g = a und h = b + c ist, R₂ = CH₃ oder H ist und das Siloxan vorzugsweise 10 bis 90 Mol-% SiH enthaltende Siloxy-Einheiten aufweist.

Die zunächst erfolgende partielle Umsetzung der SiH-Gruppen mit dem Polyetherrest erfolgt in einer Hydrosilylierungsreaktion bei erhöhten Temperaturen, vorzugsweise bei 50 bis 150 °C in Gegenwart von aus dem Stand der Technik bekannten Hydrosilylierungskatalysatoren, wie z. B. H₂PtCl₆. Als Polyetherverbindungen eingesetzt werden können Verbindungen aus der Klasse der Polyoxyalkylenverbindungen, die durch die allgemeine Strukturformel CH₂=CH-R₈-(C₂H₄O)_{d}-(C₃H₆O)ₑ-(C₄H₈O-)_{f}-R₆ beschrieben werden können, wobei
d = 0 bis 100,
e = 0 bis 100,
f = 0 bis 100 ist,
mit der Maßgabe, daß wenigstens einer der Indices d, e oder f ≥ 1 ist,

- R₈ =: Alkylenoxyrest mit 1 bis 18 C-Atomen, der gegebenenfalls verzweigt ist und/oder Doppelbindungen enthalten kann,
- R₆ =: Hydroxy-, Alkoxy- oder Acyloxyrest mit 1 bis 20 C-Atomen.

Die weitere Umsetzung der noch verbliebenen SiH-Gruppen des polyetherfunktionellen Siloxans erfolgt dann entweder durch direkte Einführung einer reaktiven Polyhydroxyorganylverbindung oder zunächst durch analoge Umsetzung mit einer zur weiteren Reaktion befähigten Zwischenverbindung, die dann in einem weiteren Reaktionsschritt mit einer Polyhydroxyorganylverbindung umgesetzt wird.

Als Polyhydroxyorganylverbindungen eingesetzt werden können Verbindungen aus der Klasse Allylglycoside, Zuckerlactone, Zuckeramine, Glucuronsäuren, z. B. Allylglucopyranosid, Gluconsäure-δ-lacton, bevorzugt jedoch solche Zuckersiloxane, die hydrolysestabile Verknüpfungen mit dem Siloxan ausbilden, wie Sorbit, Glucamin oder N-Methylglucamin.

Falls die Reaktionsführung dies zuläßt, werden dabei vorteilhafterweise einzelne oder alle dieser Zwischenstufen zusammengefaßt. Dabei kann entweder lösemittelfrei oder in einem geeigneten inerten Lösungsmittel gearbeitet werden, welches nach Beendigung der Reaktion abgetrennt wird oder aber je nach beabsichtigtem Anwendungszweck auch im Produkt verbleibt.

Die erfindungsgemäßen modifizierten Polysiloxane können in vielfältigen Anwendungen eingesetzt werden. Sie eignen sich besonders zum Einsatz in wäßrigen Medien, aus denen sie aufgrund ihrer Grenzflächenaktivität und ihrer Affinität zu Oberflächen ihre Wirkung entfalten. In Abhängigkeit von ihrem Aufbau können sie beim Einsatz in Lacken und Farben die Oberflächenbeschaffenheit der Beschichtung verbessern. Sie können als Öl-in-Wasser- oder Wasser-in-Öl-Emulgatoren Einsatz finden oder beispielsweise in kosmetischen Präparaten zur Reinigung von Haut und Haaren, zur Verbesserung des Schaumes und zur Konditionierung der Haare bzw. zur Erzielung eines angenehmen Hautgefühls eingesetzt werden. Naturgemäß werden die erfindungsgemäßen modifizierten Polysiloxane häufig zusammen mit Tensiden und anderen Additiven zur Beeinflussung der Oberflächenbeschaffenheit eingesetzt. Alle genannten Formulierungen können die bekannten Zusatzstoffe enthalten, wie z. B.:
Netzmittel, Tenside oder Emulgatoren aus den Klassen der anionischen, kationischen, zwitterionischen, amphoteren oder nichtionogenen oberflächenaktiven Substanzen, beispielsweise Fettalkoholsulfate, Fettalkoholethersulfate, Alkylsulfonate, Alkylbenzolsulfonate, Sulfobemsteinsäurealkylester, quartäre Ammoniumsalze, Alkylbetaine, Carbonsäureamidoalkylbetaine, Derivate von monomeren oder höherkondensierten Sacchariden, oxethylierte Fettalkohole, Fettsäurealkanolamide oder oxethylierte Fettsäureester, Verdickungsmittel, wie beispielsweise Kaolin, Bentonit, Fettsäuren, höhere Fettalkohole, Stärke, Polyacrylsäure und deren Derivate, Cellulosederivate, Alginate, Vaseline oder Paraffinöl.

Ferner ist ein Einsatz der erfindungsgemäßen Verbindungen als Textilhilfsmittel, als Additive in der Polyurethanschaumherstellung oder in der Formulierung von Additivpaketen für Treibstoffe denkbar.

Die folgenden Beispiele veranschaulichen die vorliegende Erfindung. Bei den Beispielen 7 und 8 handelt es sich um nicht erfindmgsgemäße Beispiele, die zum Vergleich herangezogen werden.

### Beispiel 1

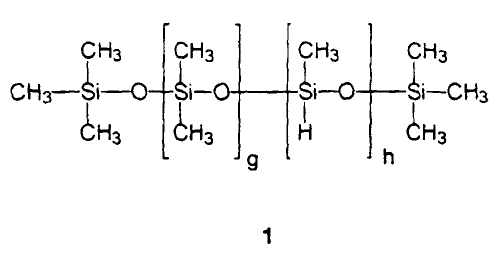

In einem 2-I-Vierhalskolben, ausgestattet mit Rückflußkühler, Rührer, Tropftrichter und Thermometer, werden 821 g (1,04 Mol) eines Allylalkohol-gestarteten Polyoxyalkylenpolymeren der allgemeinen Formel CH₂=CH-CH₂-O-(C₂H₄O)_{d}-(C₃H₆O-)ₑ-OH, das ein mittleres Molgewicht von 789 g/Mol und Indices von d = 10 und e = 5 aufweist (nachfolgend kurz als Allylpolyether P bezeichnet), 29,7 g (0,26 Mol) Allylglycidether sowie 25 mg H₂PtCl₆ (10 ppm Pt bezogen auf Gesamtansatz) unter Rühren auf eine Temperatur von 110 °C aufgeheizt. Bei dieser Temperatur werden 359 g (1 Mol SiH) eines seitenständig SiH-funktionalisierten Polydimethylsiloxans der allgemeinen Formel 1 mit den Indices g = 30 und h = 8 derart zugetropft, daß trotz einsetzender exothermer Reaktion eine Temperatur von 130 °C nicht überschritten wird. Nach beendeter Zugabe wird die Reaktionsmischung noch solange bei 110 °C gerührt, bis eine Umsatzkontrolle über den SiH-Wert zeigt, daß das Siloxan vollständig umgesetzt worden ist. Bei einem Umsatz > 99 % wird die Reaktion abgebrochen und die Platinkatalysatorreste durch Filtration aus der Reaktionsmischung entfernt. Durch Destillation im Ölpumpenvakuum werden der Überschuß Allylglycidether sowie flüchtige Nebenprodukte entfernt. Man erhält als Reaktionsprodukt ein braungelbes, dünnflüssiges Öl der zu erwartenden mittleren Zusammensetzung 2, welches einen Epoxywert von 0,25 % und ein Verhältnis von Epoxid/Polyether von ungefähr 1 : 4 aufweist.

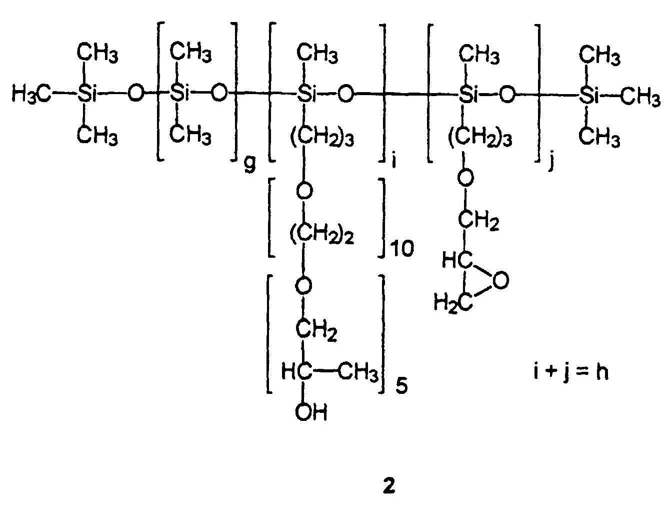

Für die nachfolgende Modifizierung des Polyether-Epoxy-Siloxans 2 wird in einem 500-ml-Vierhalskolben, ausgestattet mit Rückflußkühler, Rührer, Tropftrichter und Thermometer, eine Suspension von 4,39 g (0,0225 Mol) N-Methylglucamin in 37,5 g iso-Propanol unter Rückfluß zum Sieden erhitzt. Bei dieser Temperatur werden 144 g (0,0225 Mol Epoxid) des Polyether-Epoxy-Siloxans 2 rasch zugetropft und die Reaktionsmischung unter Rückfluß gehalten, bis nach ca. 1,5 h eine klare Lösung erhalten wird. Nach Zugabe weiterer 12,5 g iso-Propanol wird die Reaktionsmischung weitere 4 h unter Rückfluß erhitzt. Nach dem Abkühlen wird das Produkt filtriert. Als Reaktionsprodukt wird ein leicht trübes, hellgelbes Öl der mittleren Zusammensetzung 3 mit den Indices g = 30, i = 6,4, j = 1,6 erhalten, das beim Abziehen des Lösungsmittels im Vakuum zu einer harzartigen, gelben Masse erstarrt. Der besseren Handhabung wegen wird das Produkt bei der weiteren Verwendung in undestillierter Form als isopropanolische Lösung mit einem Festkörpergehalt von 75,7 % eingesetzt.

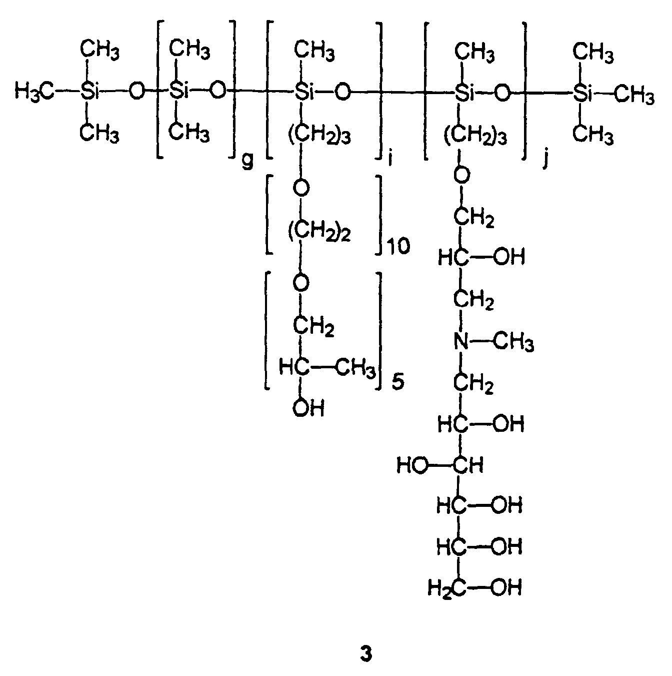

### Beispiele 2 bis 10

In analoger Weise wie in Beispiel 1 beschrieben wird das Wasserstoffsiloxan 1 unter Variation des Verhältnisses von Allylpolyether P zu Allylglycidether in einer Cohydrosilylierungsreaktion umgesetzt. Als Reaktionsprodukte werden jeweils hellgelbe bis braune, klare bis leicht trübe, dünnflüssige Öle erhalten, welche jeweils der theoretisch zu erwartenden Zusammensetzung entsprechen und die in Tab. 1 angeführten Epoxywerte aufweisen. Danach erfolgt unter den bereits beschriebenen Bedingungen die Umsetzung dieser Polyether-Epoxy-Siloxane mit N-Methylglucamin. Man erhält klare bis trübe, hellgelbe bis braungelbe Öle der mittleren Zusammensetzung 3 mit den ebenfalls in Tab. 1 aufgeführten Indices und Festkörpergehalten. Bei Beispiel 7 handelt es sich um ein nicht erfindungsgemäßes Zukkersiloxan, wie es in DE-A-43 18 537 beansprucht und auf ähnliche Weise wie beschrieben hergestellt wird. Bei Beispiel 8 handelt es sich um ein ebenfalls nicht erfindungsgemäßes Polyethersiloxan, dessen Herstellung in zahlreichen Patenten beschrieben wird. Die Beispiele 7 und 8 wurden ausgewählt, um die Eigenschaften der hier beanspruchten Siloxan-Polyether-Zucker-Copolymere von den Eigenschaften der reinen Polyethersiloxane und der reinen Zuckersiloxane abzugrenzen.

**Tabelle 1**

| Experimentelle Einzelheiten zu den Beispielen 1 bis 11 | | | | | | |
|---|---|---|---|---|---|---|
| Bsp. Nr. | Indices g/h von 1 | Eingesetztes Verhältnis von Allylglycidether zu P | Epoxywert[%] von 2 | Anteil Zuckerrest [%] an der Summe von Zucker- und Polyetherresten | Festkörpergehalt [%] der isopropanolischen Lösung von 3 | Produkt |
| 1 | 30/8 | 1 : 4 | 0,25 | 23,3 | 75,7 | A |
| 2 | | 1 : 2,33 | 0,41 | 28,8 | 78,3 | B |
| 3 | | 1 : 1,5 | 0,56 | 35,4 | 76,7 | C |
| 4 | | 1 : 1 | 0,85 | 49,4 | 80,0 | D |
| 5 | | 1:0,67 | 1,12 | 58,5 | 75,2 | E |
| 6 | | 1 : 0,25 | 1,92 | 78,8 | 72,3 | F |
| 7 | | 1 : 0 | 2,56 | 100 | 66,5 | G |
| 8 | | 0 : 1 | - | 0 | 100 | H |
| 9 | 18/7 | 1 : 1,5 | 0,63 | 37,0 | 76,1 | I |
| 10 | | 1 : 1 | 0,91 | 47,7 | 77,5 | J |
| 11 | | 1:0,67 | 1,08 | 51,1 | 78,0 | K |

### Anwendungstechnischer Teil

Die erfindungsgemäßen Materialien zeigen Eigenschaften, aufgrund derer sie als Silicontenside mit besonderen Eigenschaften verwendbar sind. Diese besondere Eigenschaft resultiert gerade aus dem Nebeneinandervorliegen freier Polyether- und Polyhydroxyorganyl- bzw. Zucker(derivat)reste in diesen ternären Siliconcopolymeren.

### Löslichkeit

**Tabelle 2**

| Löslichkeit des Polyethersiloxans H, des Aminozuckersiloxans G und zweier Aminozucker-Polyether-Siloxane C und E in Wasser | |
|---|---|
| Produkt | Aussehen einer 1 %igen wäßrigen Lösung¹⁾ |
| H | klar, homogen |
| C | klar, homogen |
| E | opak, homogen |
| G | trüb²⁾ |

| | |
|---|---|
| ¹⁾ Die Lösungen enthalten jeweils die gleiche Menge Isopropanol | |
| ²⁾ Nach einigen Stunden hat sich ein Niederschlag gebildet | |

Es wird die Wasserlöslichkeit zweier Aminozucker-Polyether-Siloxane im Vergleich zu einem reinen Polyethersiloxan und einem reinen Zuckersiloxan untersucht (Tab. 2). Während das reine Polyethersiloxan H zu 1 % eine klare Lösung ergibt, erhält man mit dem reinen Zuckersiloxan G eine trübe Lösung, aus der sich nach einiger Zeit ein Feststoff abscheidet. Grund dafür mögen durch starke Wasserstoffbrückenbindungen verursachte Aggregationen von Zuckerresten sein. Die Aminozucker-Polyether-Siloxane nehmen in ihrer physikalischen Löslichkeit eine Zwischenstellung zwischen den beiden Extremen ein. Man erhält aber in beiden Fällen klare bis opake Lösungen, aus denen sich kein Feststoff abscheidet. Somit fungieren die zusätzlichen Polyetherreste im Zuckersiloxan gleichsam als Störglieder, die Aggregationen von Zuckerresten verhindern und somit die Löslichkeit von Zuckersiloxanen erhöhen.

### Trübungspunkt

Siliconpolyether gehören zur Klasse nichtionischer Tenside, die ein inverses Löslichkeitsverhalten in Wasser aufweisen, d. h. mit steigender Temperatur immer unlöslicher werden, was sich durch Eintrüben ihrer wäßrigen Lösungen beim Erwärmen bemerkbar macht. Die Temperatur, bei der diese Trübung beim Erwärmen eintritt bzw. beim Abkühlen wieder verschwindet, ist der sogenannte Trübungspunkt, zu dessen Bestimmung es DIN-Vorschriften gibt.

Zur Überprüfung, inwieweit sich das Verhältnis von Polyetherzu Zuckerresten auf den Trübungspunkt einer wäßrigen Lösung des entsprechenden Zucker-Polyether-Siloxans auswirkt, wird eine Reihe von Zucker-Polyether-Siloxanen mit gleichem Siloxangrundgerüst, aber unterschiedlichem Anteil Zuckerrest an der Summe der Zucker- und Polyetherreste hergestellt (siehe Tab. 1) und deren Trübungspunkte in einem wäßrigen System in Anlehnung an DIN 53917 bestimmt (siehe Tab. 3 und 4). Im Gegensatz zur DIN-Vorschrift enthalten die Lösungen aufgrund des Herstellungsverfahrens geringe Mengen Isopropanol. Zum Zwecke der Vergleichbarkeit wird der Gehalt an Isopropanol jedoch in allen gemessenen Lösungen konstant gehalten. Wie aus Tab. 3 ersichtlich ist, liegt der Trübungspunkt des reinen Polyethersiloxans H bei 80 °C, ein Trübungspunkt des reinen Zuckersiloxans G ist bis 120 °C nicht zu beobachten. Es ist weiter ersichtlich, daß mit zunehmendem Anteil an Zuckerresten an der Summe von Zucker- und Polyetherresten (Produkte A bis F) der Trübungspunkt ebenfalls zunimmt. Dagegen bleiben die Trübungspunkte entsprechender Mischungen aus reinem Zuckersiloxan und reinem Polyethersiloxan konstant und niedrig (siehe Werte in Klammern bei den Produkten A, D und E). Mit den Ergebnissen aus Tab. 4 kann der Einfluß des Siloxangrundgerüsts auf die Lage des Trübungspunktes abgeschätzt werden. Bei kürzerer Siloxankette und ungefähr gleichbleibender Anzahl an funktionellen Gruppen pro Molekül (Produkte I, J und K) wird der Trübungspunkt bei vergleichbarem Verhältnis von Zuckerzu Polyetherrest erhöht.

Anhand dieser Beispiele wird demonstriert, daß der Trübungspunkt wäßriger Lösungen gezielt eingestellt bzw. gänzlich beseitigt werden kann.

**Tabelle 3**

| Trübungspunkte (in Anlehnung an DIN 53917) 16 %iger Lösungen in Wasser/Butyldiglykol/Isopropanol (70 : 24 : 6) der Aminozucker-Polyether-Siloxane A bis F aus den Beispielen 1 bis 8; zum Vergleich die Trübungspunkte des reinen Polyethersiloxans H und des reinen Zuckersiloxans G sowie in Klammern die Trübungspunkte entsprechender Mischungen aus reinem Polyethersiloxan H und reinem Zuckersiloxan G | | | | | | | | |
|---|---|---|---|---|---|---|---|---|
| Produkt | H | A | B | C | D | E | F | G |
| Trübungspunkt [°C] | 80 | 83 (76) | 85 | 92 | 96 (79) | 101 (79) | > 120 | > 120 |

**Tabelle 4**

| Trübungspunkte (in Anlehnung an DIN 53917) 16 %iger Lösungen in Wasser/Butyldiglykol/Isopropanol (70 : 24 : 6) der Aminozucker-Polyether-Siloxane I bis K aus den Beispielen 9 bis 11 | | | |
|---|---|---|---|
| Produkt | I | J | K |
| Trübungspunkt [°C] | 103 | 110 | > 120 |

## Patentansprüche

1. Organopolysiloxan-Copolymere, enthaltend im Mittel mindestens eine über einen Spacer an das Siloxan gebundene Polyhydroxyorganyl- bzw. Zucker- oder Zuckerderivatgruppe und im Mittel mindestens eine Polyoxyalkylengruppe, der allgemeinen durchschnittlichen Formel: 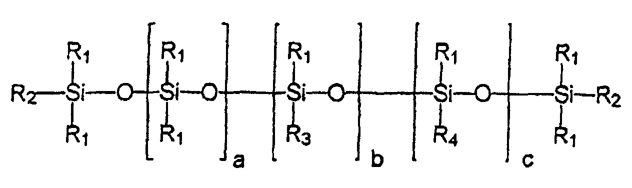 mit
R₁ = Alkylrest mit 1 bis 4 C-Atomen,
R₂ = R₁, R₃ und/oder R₄,
wobei die Indices a, b und c ganze Zahlen in den angegebenen Bereichen darstellen
a = 0 bis 200,
b = 0 bis 50,
c = 0 bis 50,
mit der Maßgabe, dass mindestens jeweils ein Rest R₃ und R₄ enthalten ist,
R₃ = Polyoxyalkylenrest der allgemeinen durchschnittlichen Formel
- R₅-(C₂H₄O)_{d}-(C₃H₆O)ₑ-(C₄H₈O)_{f}-R₆
mit
d = 0 bis 100,
e = 0 bis 100,
f = 0 bis 100,
mit der Maßgabe, dass wenigstens einer der Indices d, e oder f ≥ 1 ist,
R₅ = Alkylenoxyrest mit 1 bis 20 C-Atomen, der gegebenenfalls verzweigt ist und/oder Doppelbindungen enthalten kann,
R₆ = Hydroxy-, Alkoxy- oder Acyloxyrest mit 1 bis 20 C-Atomen,
R₄ = Rest der allgemeinen Formel -R₇-PH, wobei der Rest R₇ als Spacer zwischen Siloxangerüst und Polyhydroxyorganylrest bzw. Zuckerrest fungiert und sich von Verbindungen ableitet, die zum einen eine zur hydrosilylierenden Anlagerung an Wasserstoffsilane befähigte C-C-Mehrfachbindung und zum anderen eine zur Reaktion mit der Polyhydroxyverbindung bzw. dem Zucker oder Zuckerderivat befähigte reaktive Gruppe besetzen, ausgenommen ein Polyetherrest,
PH eine Zucker- oder Zuckerderivatgruppe bzw. ein Polyhydroxyorganylrest ist, der eine definierte Anzahl n von (C-OH)-Gruppen enthält, wobei n eine Zahl von 5 bis 15 ist.

2. Organopolysiloxan-Copolymere gemäß Anspruch 1, **dadurch gekennzeichnet, dass**
a = 1 bis 150,
b = 1 bis 30,
c = 1 bis 30 ist
und der Quotient b/c Werte von 0,1 bis 10 annehmen kann.

3. Organopolysiloxan-Copolymere gemäß Anspruch 1 oder 2, **dadurch gekennzeichnet, dass**
a = 10 bis 100,
b = 1 bis 20,
c = 1 bis 20 ist
und der Quotient b/c Werte von 0,25 bis 4 annehmen kann.

4. Organopolysiloxan-Copolymere gemäß Anspruch 1 bis 3, **dadurch gekennzeichnet, dass** der Rest PH der Rest eines Mono-, Di-, Oligo- oder Polysaccharids, deren Glykosiden oder entsprechenden Derivaten ist.

5. Organopolysiloxan-Copolymere gemäß Anspruch 1 bis 4, **dadurch gekennzeichnet, dass** die Verknüpfung des Spacers R₇, mit dem Polyhydroxyorganylrest PH über eine Acetal-, Ester-, Amid-, Ether-, Thioether- oder Aminbindung erfolgt.

6. Organopolysiloxan-Copolymere gemäß Anspruch 1 bis 5, **dadurch gekennzeichnet, dass** die Verknüpfung des Spacers R₇ mit dem Polyhydroxyorganylrest PH über eine hydrolysestabile Ether-, Thioether- oder Aminbindung erfolgt, wie sie durch Umsetzung eines aminofunktionellen Zuckerderivats mit einem epoxyfunktionellen Siloxan erhalten wird.

7. Verfahren zur Herstellung der Organopolysiloxan-Copolymere gemäß Anspruch 1 bis 6, **dadurch gekennzeichnet, dass** man ein Polyorganowasserstoffsiloxan zunächst durch Cohydrosilylierung mit einem Polyether und einer zur Reaktion mit einer Polyhydroxyorganylverbindung oder deren Derivaten befähigten Verbindung umsetzt und in einer zweiten Stufe das nun zur Reaktion mit der Polyhydroxyorganylverbindung befähigte Polysiloxan mit der Polyhydroxyorganylverbindung umsetzt.

8. Verfahren nach Anspruch 7, **dadurch gekennzeichnet, dass** man ein Polyorganowasserstoffsiloxan zunächst durch Cohydrosilylierung mit einem Polyether und einer eine endständige Epoxygruppe tragenden Verbindung umsetzt und in einer zweiten Stufe das epoxyfunktionelle Polyethersiloxan mit einer eine nucleophile Hydroxy-, Mercapto- oder Aminogruppe enthaltenden Polyhydroxyorganylverbindung umsetzt.

9. Verwendung der Verbindungen gemäß den Ansprüchen 1 bis 6 als grenzflächenaktive Substanzen in bevorzugt polaren, insbesondere wässrigen Medien.

## Claims

1. Organopolysiloxane copolymer comprising on average at least one polyhydroxyorganyl group and/or sugar group or sugar-derivative group, attached to the siloxane via a spacer, and on average at least one polyoxyalkylene group, of the general average formula : 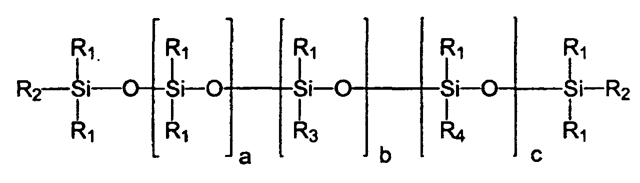 where
R₁ = alkyl radical of 1 to 4 carbon atoms,
R₂ = R₁, R₃ and/or R₄,
and where the indices a, b, and c are integers within the stated ranges
a = 0 to 200,
b = 0 to 50,
c = 0 to 50,
with the proviso that at least one radical R₃ and R₄ is present in each case,
R₃ = polyoxyalkylene of the general average formula
-R₅-(C₂H₄O)_{d}-(C₃H₆O)ₑ-(C₄H₈O)_{f}-R₆
where
d = 0 to 100,
e = 0 to 100,
f = 0 to 100,
with the proviso that at least one of the indices d, e or f is ≥ 1,
R₅ = alkyleneoxy radical having 1 to 20 carbon atoms which is optionally branched and/or can contain double bonds,
R₆ = hydroxyl, alkoxy or acyloxy radical having 1 to 20 carbon atoms,
R₄ = radical of the general formula -R₇-PH,
the radical R₇ functions as a spacer between siloxane skeleton and polyhydroxy-organyl radical and/or sugar radical and is derived from compounds which have, firstly, a C-C multiple bond that is capable of hydrosilylating bonding to hydridosilanes and, secondly, a reactive group that is capable of reaction with the polyhydroxy compound or the sugar or sugar derivative, with the exception of a polyether radical,
PH = a sugar or sugar derivative group or polyhydroxyorganyl radical containing a defined number n of (C-OH) groups, where n is a number from 5 to 15.

2. Organopolysiloxane copolymer according to Claim 1, **characterized in that**
a = 1 to 150,
b = 1 to 30,
c = 1 to 30
and the quotient b/c can adopt values from 0.1 to 10.

3. Organopolysiloxane copolymer according to Claim 1 or 2, **characterized in that**
a = 10 to 100,
b = 1 to 20,
c = 1 to 20
and the quotient b/c can adopt values from 0.25 to 4.

4. Organopolysiloxane copolymer according to Claim 1 to 3, **characterized in that** the radical PH is the radical of a mono-, di-, oligo- or polysaccharide, its glycosides or corresponding derivatives.

5. Organopolysiloxane copolymer according to Claim 1 to 4, **characterized in that** the linking of the spacer R₇ to the polyhydroxyorganyl radical PH takes place by way of an acetal, ester, amide, ether, thioether or amine bond.

6. Organopolysiloxane copolymer according to Claim 1 to 5, **characterized in that** the linking of the spacer R₇ to the polyhydroxyorganyl radical PH takes place by way of a hydrolysis-stable ether, thioether or amine bond, as is obtained by reacting an amino-functional sugar derivative with an epoxy-functional siloxane.

7. Process for preparing an organopolysiloxane copolymer according to Claim 1 to 6, **characterized in that** a polyorganohydridosiloxane is reacted first of all by cohydrosilylation with a polyether and with a compound that is capable of reaction with a polyhydroxyorganyl compound or derivatives thereof, and in a second stage the polysiloxane, now capable of reaction with the polyhydroxyorganyl compound, is reacted with the polyhydroxyorganyl compound.

8. Process according to Claim 7, **characterized in that** a polyorganohydridosiloxane is reacted first of all by cohydrosilylation with a polyether and with a compound carrying a terminal epoxy group, and in a second stage the epoxy-functional polyethersiloxane is reacted with a polyhydroxyorganyl compound that contains a nucleophilic hydroxyl, mercapto or amino group.

9. Use of a compound according to any of Claims 1 to 6 as a surface-active substance in preferably polar, especially aqueous media.

## Revendications

1. Copolymères organopolysiloxane contenant en moyenne au moins un groupement polyhydroxyorganyle ou selon le cas de sucre ou de dérivé de sucre, lié au siloxane par l'intermédiaire d'un espaceur et en moyenne au moins un groupement polyoxyalkylène, qui ont pour formule générale moyenne : 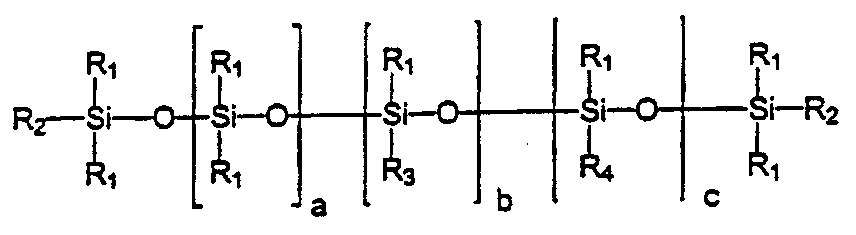 avec :
R₁ = radical alkyle avec 1 à 4 atomes de carbone,
R₂ = R₁, R₃ et/ou R₄,
les indices a, b et c représentant des nombres entiers dans les plages indiquées ci-dessous:
a = 0 à 200,
b = 0 à 50,
c = 0 à 50,
sous réserve qu'au moins à chaque fois un radical R₃ et un radical R₄ soient présents,
R₃ = radical polyoxyalkylène de formule générale moyenne :
-R₅-(C₂H₄O)_{d}-(C₃H₆O)ₑ-(C₄H₈O)_{f}-R₆
avec
d = 0 à 100,
e = 0 à 100,
f = 0 à 100,
sous réserve qu'au moins l'un des indices d, e ou f soit ≥ 1,
R₅ = radical alkylèneoxy avec 1 à 20 atomes de carbone, qui est éventuellement ramifié et/ou peut contenir des doubles liaisons,
R₆ = radical hydroxy, alkoxy ou acyloxy avec 1 à 20 atomes de carbone,
R₄ = radical de formule générale -R₇-PH, dans lequel :
le radical R₇ a la fonction d'espaceur entre la charpente de siloxane et le radical polyhydroxyorganyle ou selon le cas le radical de sucre et est dérivé de composés qui possèdent, d'une part, une liaison multiple C-C à même de se fixer par hydroxysilylation sur des hydrogénosilanes et, d'autre part, un groupement réactif à même de réagir avec le composé polyhydroxylé ou selon le cas avec le sucre ou le dérivé de sucre, à l'exception d'un radical polyéther,
PH = un groupement de sucre ou de dérivé de sucre ou selon le cas un radical polyhydroxyorganyle, qui contient un nombre défini n de groupements (C-OH), n étant un nombre de 5 à 15.

2. Copolymères organopolysiloxane selon la revendication 1, **caractérisés en ce que** :
a = 1 à 150,
b = 1 à 30,
c = 1 à 30,
et le quotient b/c peut prendre des valeurs de 0,1 à 10.

3. Copolymères organopolysiloxane selon la revendication 1 ou 2, **caractérisés en ce que** :
a = 10 à 100,
b = 1 à 20,
c = 1 à 20,
et
le quotient b/c peut prendre des valeurs de 0,25 à 4.

4. Copolymères organopolysiloxane selon les revendications 1 à 3, **caractérisés en ce que** le radical PH est le radical d'un mono-, di-, oligo- ou polysaccharide, de leurs glycosides ou de leurs dérivés correspondants.

5. Copolymères organopolysiloxane selon les revendications 1 à 4, **caractérisés en ce que** la combinaison de l'espaceur R₇ avec le radical polyhydroxyorganyle PH se fait par l'intermédiaire d'une liaison acétal, ester, amide, éther, thioéther ou amine.

6. Copolymères organopolysiloxane selon les revendications 1 à 5, **caractérisés en ce que** la combinaison de l'espaceur R₇ avec le radical polyhydroxyorganyle PH se fait par l'intermédiaire d'une liaison éther, thioéther ou amine stable à l'hydrolyse, liaison qu'on obtient après réaction d'un dérivé de sucre à fonction amino avec un siloxane à fonction époxy.

7. Procédé de fabrication des copolymères organopolysiloxane selon les revendications 1 à 6, **caractérisé en ce que** l'on transforme un polyorganohydrogénosiloxane tout d'abord par cohydrosilylation avec un polyéther et un composé à même de réagir avec un composé polyhydroxyorganylé ou ses dérivés et on transforme, dans une seconde étape, le polysiloxane à présent à même de réagir avec le composé polyhydroxyorganylé, avec le composé polyhydroxyorganylé.

8. Procédé selon la revendication 7, **caractérisé en ce que** l'on transforme un polyorganohydrogénosiloxane tout d'abord par cohydrosilylation avec un polyéther et un composé portant un groupement époxy en position terminale et on transforme, dans une seconde étape, le polyéthersiloxane à fonction époxy avec un composé polyhydroxyorganylé contenant un groupement nucléophile hydroxy, mercapto ou amino.

9. Utilisation des composés selon les revendications 1 à 6 comme substances tensioactives dans des milieux en particulier aqueux, de préférence polaires.
